(19) Europäisches Patentamt
European Patent Office
Office européen des brevets

(11) EP 4 787 254 A1

(12) EUROPEAN PATENT APPLICATION

(43) Date of publication:
05.08.2026 Bulletin 2026/32

(21) Application number: 25154947.3

(22) Date of filing: 30.01.2025

(51) International Patent Classification (IPC):
G06Q 10/047 (2023.01)    G06Q 10/0631 (2023.01)
G06Q 50/40 (2024.01)

(52) Cooperative Patent Classification (CPC):
G06Q 10/047; G06Q 10/0631; G06Q 50/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Aktiengesellschaft
80333 München (DE)

(72) Inventors:
• Kumar, Abhay
560100 Bengaluru (IN)
• Subbaiah Bommanda Ganapathi, Smaran
91052 Erlangen (DE)
• Gundavarapu, Sesha Kiran
Princeton, 08540 (US)

(74) Representative: Siemens Patent Attorneys
Postfach 22 16 34
80506 München (DE)

(54) **EV FLEET DISPATCH PLANNING METHOD AND SYSTEM**

(57)    A method of, and system for, dispatch planning for a fleet of EVs, such as buses, is described. The dispatch planning is carried out over a two-day period, with the ability to vary the routes allocated to the EVs and the time required for charging overnight.

FIG 1

**Description**

The present invention relates to a computer-implemented method of, and system for, planning the dispatch of individual electric vehicles (EVs) in an EV fleet from an EV fleet depot, in particular where the EV fleet is a bus fleet.

In recent years, the number of public service vehicles, such as buses, transitioning to all-electric vehicle (EV) fleets has increased dramatically. Electrification of depots for public transportation and commercial vehicles is a key step towards achieving a sustainable and efficient transportation system. By converting to electric vehicles emissions responsible for greenhouse gases can be reduced, and some mitigation of climate change effects can be achieved. In addition, the public perception of such transportation and commercial vehicle usage is im-proved since the vehicle owners are able to demonstrate a commitment to sustainability and environmental awareness. However, there are a series of challenges that come with the electrification of a fleet of vehicles, particularly a large fleet of vehicles. One of these is being able to allocate routes to an EV such as a bus based upon its battery storage capacity and the amount of charge that will be consumed during operation.

An EV fleet depot operator needs to be able to allocate routes by maximising the distance covered by the EV fleet in any one day. This therefore needs to take into account the charging requirements of the EV fleet, the availability of the charging infrastructure and the requirements of the routes themselves. This may be that only vehicles of a certain size are suitable, for example, for routes involving low bridges or narrow streets. In addition, since all routes run to a strict timetable, the EV fleet depot operator needs to be able to plan a dispatch schedule as well as a charging schedule. Whilst for small fleets this may be done manually, for larger fleets this task quickly becomes too complex to ensure an optimum route assignment.

A further challenge for an EV fleet operator is to be able to assign routes on a second day based upon the state of charge (SoC) of an EV as it returns to the EV fleet depot at the end of the first day and the amount of time the EV needs to spend at the EV fleet depot for charging overnight. For example, an EV may arrive at the EV fleet depot at 10pm on the first day and be allocated a route starting at 2am on the second day, leaving only four hours for charging and balancing. Depending on the EV fleet depot charging infrastructure capacity and the charging schedule of other EVs in the EV fleet depot overnight, this may not be enough time to ensure that the EV battery is fully charged.

There is therefore a need for an EV fleet operator to be able to manage an EV fleet of vehicles such as buses, in terms of maximising fleet usage and planning at least one day ahead of any current route allocations.

The present invention aims to address these issues by providing, in a first aspect, a computer-implemented method of planning the dispatch of individual electric vehicles (EV) in an EV fleet from an EV fleet depot, comprising: receiving a list of routes for a first day, allocating, on a maximum daily distance covered by the EV fleet basis, at least one route to each EV in the fleet available for route allocation, and determining a dispatch schedule for the first day; based on the dispatch schedule for the first day, determining an arrival time at the EV fleet depot and a state of EV charge for each EV in the fleet when its last route of the first day is complete; assigning a charging duration factor (CDF) to each EV in the EV fleet based on a respective charging requirement of each EV and an available charging infrastructure of the EV fleet depot; receiving a list of routes for a second day; based on the charging duration factor (CDF) assigned to each EV and the charging requirements for each EV: determining an expected state of charge for the EV; and allocating at least one route to the EV for the second day on the basis of the expected state of charge; and based on the route allocation and the charging duration factor (CDF) of each EV in the EV fleet, determining a dispatch schedule for the second day.

By basing the dispatch planning on an objective of maximising the overall utilisation of the EV fleet as a whole, it is possible to ensure that whilst the mileage of individual EVs may increase sharply over a year, the average mileage of the fleet increases at a much slower rate. This reduces the overall turnover in EVs within an EV fleet, thereby reducing the need to dispose of the EV batteries and recycle or scrap the remaining EV components. This creates an EV fleet that is a more sustainable and environmentally beneficial option for an EV fleet owner. Since the cost of replacing and scrapping such EVs is also considerable, this maximises the return on investment in individual EVs for an EV fleet owner.

Preferably, the allocating at least one route to the EV for the second day further comprises: confirming that the at least one route allocated to the EV conforms to overall EV fleet balancing. Preferably, the at least one route allocated to the EV for the second day conforms to overall EV fleet balancing if the at least one route is different to the at least one route allocated to the EV for the first day.

Preferably, the method further comprises: (i) based on the dispatch schedule for the second day, generating a charging schedule for the EVs in the EV fleet; (ii) optimising the charging schedule to maximise the number of EVs in the EV fleet that have fully charged and balanced battery storage; (iii) for any EVs for which the battery storage is not fully charged and balanced, incrementing the charging duration factor (CDF) by an amount ΔCDF and determining an updated charging schedule for the second day; repeating steps (i) to (ii) until either a pre-determined maximum number of iterations is reached or all EVs in the EV fleet have fully charged and balanced battery storage, whichever occurs first; allocating EVs for which the battery storage is not fully charged and balanced to shorter routes and removing any remaining EVs for which the battery storage is not fully charged and balanced from the dispatch planning.

Preferably, the allocating at least one route to each EV in the fleet available for route allocation comprises implementing a mixed-integer linear programming (MILP) model. This preferably comprises defining the route allocation as an objective problem of maximising the distance covered by the EV fleet; and solving the objective problem within the constraints of: allocating each route to a maximum of one EV; allocating multiple routes to an EV depending upon the battery storage capacity of the EV; allocating a route to an EV based upon an EV type classification requirement of the route; allocating a route to an EV based upon its availability.

Preferably, defining the route allocation also includes an objective problem of balancing the EV fleet.

Preferably, the method further comprises repeating the steps to determine the dispatch schedule for the second day to determine the dispatch schedule for successive days.

In a second aspect, the present invention also provides an electric vehicle (EV) fleet dispatch system, comprising: a plurality of EV chargers; a communications network; and

a server hosting a computer-implemented scheduling method for scheduling EV charging in the depot as described above, wherein the plurality of EV chargers and the server are connected in a network by, and adapted to exchange data via, the communications network.

Preferably the system further comprises a user terminal adapted to be connected to the server via the communications network.

Most preferably, the electric vehicles are buses.

The present invention will now be described by way of example only, and with reference to the accompanying drawings, in which:

Figure 1 is a flowchart illustrating a computer-implemented method of planning the dispatch of individual electric vehicles (EVs) in an EV fleet from an EV fleet depot in accordance with a first embodiment of the present invention:
Figure 2 is a flowchart illustrating how embodiments of the present invention can be used to determine daily dispatch schedules over a number of successive days;
Figure 3 is a flowchart illustrating a computer-implemented method of planning the dispatch of individual electric vehicles (EVs) in an EV fleet from an EV fleet depot in accordance with this second embodiment of the present invention;
Figure 4 is a flowchart illustrating a method of removing EVs that are not fully charged and balanced from the dispatch planning for use with embodiments of the present invention;
Figure 5 illustrates the results of the use of the methods in accordance with the second embodiment of the present invention;
Figure 6 is a chart illustrating the bus-to-route mapping for the first second day dispatch planning for the EV fleet of Figure 5; and
Figure 7 is a schematic representation of an electric vehicle (EV) fleet dispatch system employing methods in accordance with the embodiments of the present invention.

The preferred embodiments of the present invention take the approach of determining an objective to maximise the usage of and EV fleet, such as a fleet of electric buses, and solving this objective as a problem with a number of constraints. This enables both day 1 and day 2 planning in terms of dispatch and charging. The method of planning the dispatch of individual electric vehicles (EV) in an EV fleet from an EV fleet depot, is computer-implemented, allowing for large EV fleet sizes to be accommodated. Initially, the first day planning is done, by receiving a list of routes for a first day, allocating, on a maximum daily distance covered by the EV fleet basis, at least one route to each EV in the fleet available for route allocation, and determining a dispatch schedule for the first day. Then, based on the dispatch schedule for the first day, an arrival time at the EV fleet depot and a state of EV charge is determined for each EV in the fleet when its last route of the first day is complete. Once this is known, a charging duration factor (CDF) can be assigned to each EV in the fleet. This is based on a respective charging requirement of each EV and an available charging infrastructure of the EV fleet depot. In order to then carry out planning for the second day, a list of routes for the second day is received. Based on the charging duration factor (CDF) assigned to each EV and the charging requirements for each EV, an expected state of charge for the EV is determined and at least one route is allocated to the EV for the second day on the basis of the expected state of charge. Then, based on the route allocation and the charging duration factor (CDF) of each EV in the EV fleet, a dispatch schedule for the second day can be determined. By having the status of all EVs in the EV fleet at the end of the first day as an input to the planning for the second day, the process can be repeated over any number of successive days. These and other aspects of the preferred embodiments of the present invention are explained in further detail below.

The following exemplary embodiment describes the dispatch planning of an EV fleet containing buses with three different battery storage capacities and three different possible bus lengths. However, it will be understood by the person skilled in the art that the techniques applied to plan the dispatch of the EV fleet may be applied to a range of EV types, such as coaches and other public service vehicles (PSVs) and trucks and other heavy goods vehicles (HGVs), battery storage capacities and lengths. In order to begin EV fleet depot dispatch planning, key parameters for both the types of EV within an EV fleet and the types of routes on which the EVs will be dispatched are established. In this example, the EV fleet contains buses with three different batter storage capacities: 240kWh, 380kWh and 510kWh. The input state of charge (SoC) indicating that the EV is ready for dispatch is taken to be a default value of 100%, with a safety margin default of 15%. In the situation where an EV is assigned multiple routes, a break time between routes is provided to ensure that a subsequent route does not start with a significant delay. This default is set at 30 minutes. This also requires that an availability of an EV is known, which may be data taken from a database or entered by a user. Finally, it is necessary to include a consumption factor (see below) that takes into account the rate at which the SoC of the EV diminishes over a route. Four EV lengths are defined as shown in Table 1 below:

Table 1: definitions of EV length type as key parameters

| Vehicle Length Type | Length | Type |
|---|---|---|
| | < 6m | 1 |
| | 6m - 12m | 2 |
| | 12m - 18m | 3 |
| | > 18m | 4 |

One key parameter to be determined is the consumption factor for each EV. Whilst many factors can influence this, one major influence is ambient temperature. Plotting the rate of energy consumption in kWh/km against temperature for all of the EVs in an EV fleet and fitting the resulting data with a parabolic curve leads to a consumption factor list for all EV types in different operating conditions. This can then be factored into the dispatch planning.

Table 2 shows an example list of EVs within an EV fleet, along with various key parameters:

Table 2: example EVs in an EV fleet in which dispatching scheduling is to be carried out

| EV ID | Battery Storage Capacity (kWh) | Vehicle Length Type | Odometer at start (km) | Age (days) | Initial SoC (%) |
|---|---|---|---|---|---|
| 120 | 240 | 2 | 100231 | 596 | 85 |
| 121 | 240 | 2 | 232444 | 1462 | 100 |
| 122 | 240 | 2 | 535444 | 2638 | 90 |
| 123 | 240 | 2 | 123344 | 743 | 100 |
| 210 | 380 | 3 | 234444 | 1037 | 85 |
| 211 | 380 | 3 | 234555 | 1513 | 100 |
| 130 | 240 | 2 | 100231 | 615 | 80 |
| 131 | 240 | 2 | 232444 | 1270 | 100 |
| 132 | 240 | 2 | 535444 | 1809 | 100 |

It can be seen that two of the EVs are longer in length and have a correspondingly greater battery storage capacity, which would consequently require a greater charging time than EVs with lower battery storage capacity.

Finally, the other main input for the dispatch scheduling is the route list, an example of which is shown in Table 3:

Table 3: route details for example routes served by an EV charging depot

| Route ID | Route Start Time | Route End Time | Vehicle Length Type Required | Route Distance (km) | Route Preference |
|---|---|---|---|---|---|
| 1 | 04:30 | 09:00 | 2 | 74 | 0 |
| 2 | 04:30 | 13:30 | 3 | 93 | 1 |
| 3 | 04:30 | 09:00 | 3 | 338 | 0 |
| 4 | 04:30 | 14:00 | 2 | 380 | 0 |
| 5 | 04:30 | 13:00 | 2 | 166 | 0 |
| 6 | 04:30 | 13:30 | 1 | 73 | 0 |

(continued)

| Route ID | Route Start Time | Route End Time | Vehicle Length Type Required | Route Distance (km) | Route Preference |
|---|---|---|---|---|---|
| 7 | 01:30 | 09:00 | 3 | 183 | 1 |
| 8 | 10:30 | 21:00 | 3 | 283 | 1 |
| 9 | 10:30 | 14:00 | 2 | 63 | 0 |
| 10 | 04:30 | 21:00 | 3 | 226 | 0 |
| 11 | 04:30 | 22:00 | 2 | 59 | 0 |
| 12 | 04:30 | 09:00 | 2 | 87 | 0 |
| 13 | 11:30 | 19:30 | 3 | 206 | 1 |
| 14 | 04:30 | 19:30 | 3 | 60 | 0 |

It can be seen from Table 3 that there is a significant difference in the length of the routes being served, and that these take varying amounts of time. Two features to note are the preference for the required length type, which is determined by the route topography and expected passenger numbers, and the route preference, which indicates whether or not an EV is the preferred vehicle on that route over and above any other type of vehicle (for example, conventional diesel, hybrid or natural gas).

In order to allocate routes to the EVs in an EV fleet and prepare a dispatch schedule for more than a single day, it is necessary to first determine the dispatch schedule for a single day.

This is done in embodiments of the present invention by setting up an objective to maximise the distance covered by the EVs in the EV fleet within a Mixed-Integer Linear Programming (MILP) model, and then solving this objective within a number of constraints. Initially, the EV, route and consumption factor data is gathered:

$$EV2R: EV \text{ to route mapping decision variable } \{0,1\}$$

$$r \in Routes; ev \in EVs, CF = Consumption\ factor$$

Then, the objective to maximise the distance covered by the EVs in the EV fleet as a whole is set up:

$$\max \sum_{ev} \sum_{r} \left(Dist_r * EV2R_{r,ev} * (preference_r + 1) * MileageWeightage_{ev}\right)$$

Where the *MileageWeightage$_{ev}$* for each EV takes into account the current odometer reading of the EV and a requirement to ensure that each EV runs over a similar distance in a calendar year. For example, and EV that covers a longer route on day one is allocated a shorter distance route on day two, and an EV that covers a shorter route on day one is allocated a longer route on day two, based on the *MileageWeightage$_{ev}$* of each EV.

The first constraint considered is to ensure that one route is only allocated to one or no EVs:

$$\sum_{ev} \left(EV2R_{r,ev} \leq 1\right) \forall r \in Routes$$

The second constraint considered is that multiple routes may be allocated to a single EV depending upon its maximum battery storage capacity:

$$\sum_{r} \left(EV2R_{r,ev} * Dist_r * CF_{r,ev} \leq maxBatteryCap_{ev} * (1 - SafetyMargin) * inputSoC_{ev}\right) \forall ev \in EV$$

The third constraint is that the EV is mapped to a route based on an EV type classification for a route - this is determined by the vehicle length type in Table 1 above:

$$\left(EV2R_{r,ev} \leq EV2R\_type\_match\right)\forall r \in Routes, \forall ev \in EV$$

The fourth constraint is that the EV is mapped based upon its availability, which is the time it becomes available either after completing a route or completing charging and balancing, or after servicing, maintenance or breakdown:

$$\left(EV2RMinTime_{ev} \geq BusAvailabilityTime\right)\forall ev \in EV$$

It may also be desirable to set a second objective, which is optional, based on balancing the EV fleet. Within the model, this is stated as:

$$\begin{matrix} If\ Fleet\ Balancing\ is\ True:\ Max\ No.of\ EVs\ mapped \\ If\ Fleet\ balancing\ is\ False:\ Min\ No.of\ EVs\ mapped \end{matrix} \sum_{ev} (EV_{ev})\ \forall ev \in EV$$

This objective tries to ensure that over time, for example, over a period of at least a month, an EV will not always travel the same route.

In addition, EVs are assigned to routes based on a preference given as a binary value in a decision variable table. This is illustrated in Table 4:

Table 4: Decision variable table example

| EV to Route | Route 1 | Route 2 | Route 3 | Route 4 |
|---|---|---|---|---|
| EV1 | 0 | 0 | 1 | 0 |
| EV2 | 0 | 1 | 0 | 1 |
| EV3 | 1 | 0 | 0 | 0 |

It can be seen from Table 4 that both EV1 and EV3 are mapped to a single route each, but that EV2 is mapped to two routes. This mapping indicates the preference per route for individual EVs creating a soft constraint (along with the requirement that all EVs within the EV fleet run a similar distance over a year) used in the MILP model.

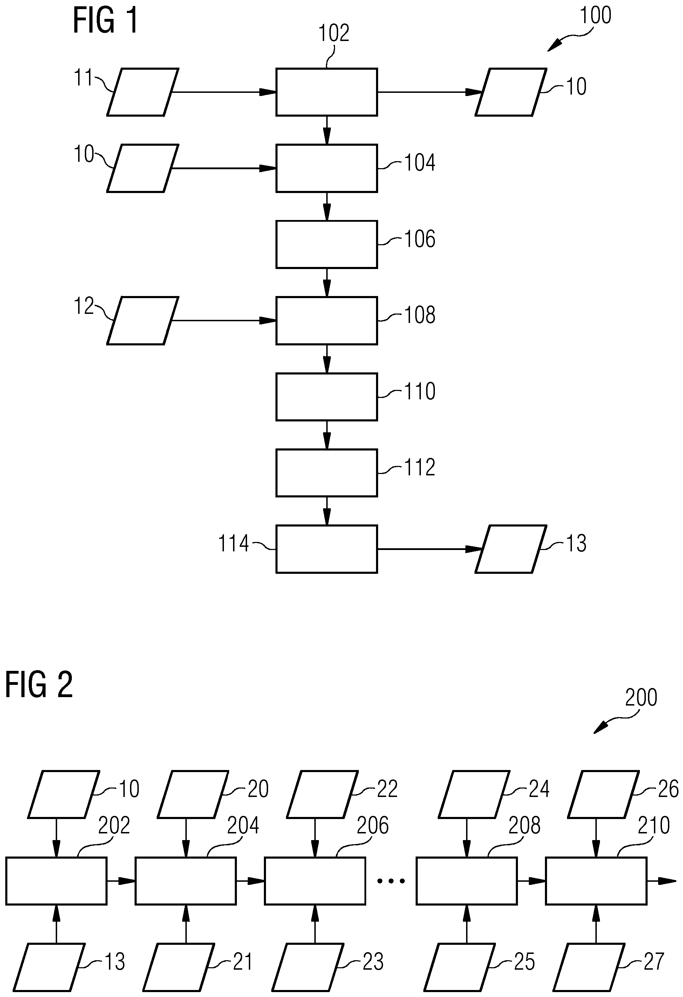

An example of how the embodiments of the present invention may be used to generate both Day 1 and Day 2 dispatch planning will now be described. Figure 1 is a flowchart illustrating a computer-implemented method of planning the dispatch of individual electric vehicles (EVs) in an EV fleet from an EV fleet depot in accordance with a first embodiment of the present invention. The method 100 begins, at step 102, with determining a dispatch schedule 10 for the first day. This includes receiving a list 11 of routes and allocating at least one route to each EV in the fleet available for route allocation, on the basis of the maximum daily distance covered by the EV fleet. This is done as described above, where the overall objective is to maximise the distance covered by the EV fleet as a whole. Next, at step 104, based on this dispatch schedule 10, an arrival time at the EV fleet depot and the state of charge of each EV in the fleet when its last journey of the day is complete is determined. Once an EV has finished all routes for the day and returned to the EV fleet depot, it will of course require charging and balancing. At step 106, a Charging Duration Factor (CDF) is assigned to each EV in the EV fleet. This is based on a respective charging requirement of each EV and the available charging infrastructure within the EV fleet depot. This factor may be determined empirically as follows. The charging and balancing times required for each EV at different states of charge within the EV fleet depot are collected. This data is then analysed to determine a factor that must be applied to available charging times to ensure that the EV leaves the EV fleet depot after an overnight charging and balancing session fully charged. In other words, the ratio between the mean time available for charging and balancing at the EV fleet depot and the mean time required for charging and balancing creates the CDF, which is then factored into each dispatch planning run for a second day.

Figure 2 is a flowchart illustrating how embodiments of the present invention can be used to determine daily dispatch schedules over a number of successive days. The method 200 begins on day zero at step 202 by carrying out the method 100 illustrated in Figure 1 to determine the dispatch schedules 11, 13 for day one and day two. At the end of day two, at step 204, the input data 20 for day three (routes, the status of all EVs from the second day dispatch schedule) is gathered and the dispatch schedule 21 for day three is determined. At the end of day three, at step 206 the input data 22 for day four (routes, the status of all EVs from the third day dispatch schedule) is gathered and the dispatch schedule 23 for day four is determined. This process continues on day $n$-1, at step 208, with the input data 24 for the $n^{th}$ day (routes, the status of all EVs from the $n^{th}$-1 day dispatch schedule) gathered and the dispatch schedule 25 for day $n$ is determined. On day $n$, at step 210, the input data 26 for the $n+1^{th}$ day (routes, the status of all EVs from the $n^{th}$ day dispatch schedule) is gathered and the dispatch schedule 27 for day *n+1* is determined, and so on.

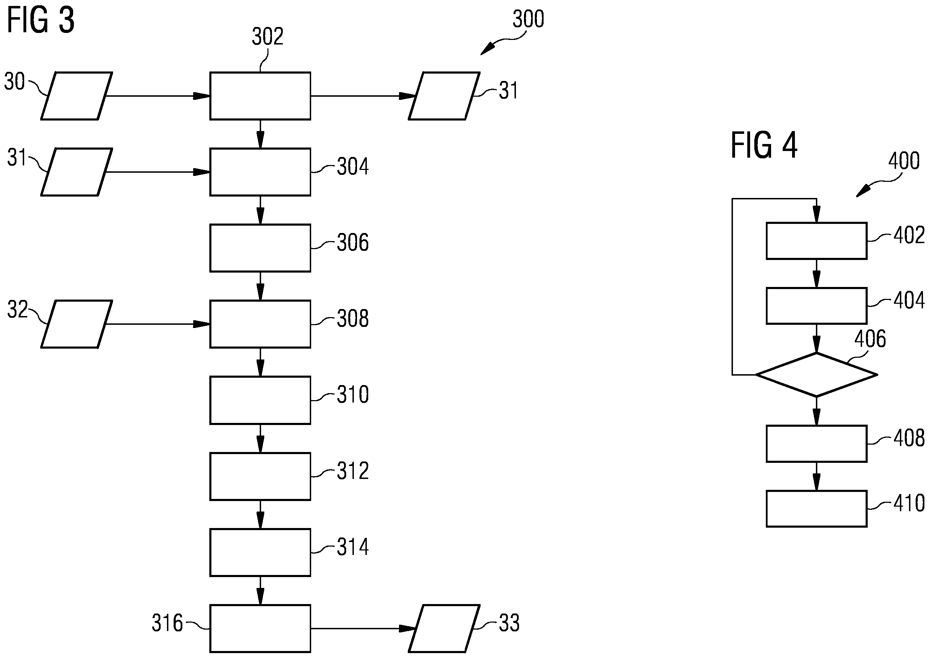

An example of how further embodiments of the present invention may be used to generate both Day 1 and Day 2 dispatch planning will now be described. It is also possible to consider more than one objective as part of the determination of the dispatch planning. As well as maximising the distance covered by the EV fleet as a whole, balancing the manner in which this occurs may also be a desirable outcome for an EV fleet owner. This is optional, since maximising the distance covered will result in a profitable use of EV resources for an EV fleet owner. However, by balancing the use of the EVs within the context of maximising distance covered the EVs themselves will have an increased service life. In a system installed in an EV fleet depot this may be realised as a user selectable option within the software, in order to include (or not) the additional objective. Figure 3 is a flowchart illustrating a computer-implemented method of planning the dispatch of individual electric vehicles (EVs) in an EV fleet from an EV fleet depot in accordance with this second embodiment of the present invention. The method 300 begins, at step 302, with determining a dispatch schedule 30 for the first day. This includes receiving a list 31 of routes and allocating at least one route to each EV in the fleet available for route allocation, on the basis of the maximum daily distance covered by the EV fleet. This is as described above, where the overall objective is to maximise the distance covered by the EV fleet as a whole. Next, at step 304, based on this dispatch schedule 30, an arrival time at the EV fleet depot and the state of charge of each EV in the fleet when its last journey of the day is complete is determined. Once an EV has finished all routes for the day and returned to the EV fleet depot, it will of course require charging and balancing. At step 306, a Charging Duration Factor (CDF) is assigned to each EV in the EV fleet. This is based on a respective charging requirement of each EV and the available charging infrastructure within the EV fleet depot. This factor may be determined empirically as follows. The charging and balancing times required for each EV at different states of charge within the EV fleet depot are collected. This data is then analysed to determine a factor that must be applied to available charging times to ensure that the EV leaves the EV fleet depot after an overnight charging and balancing session fully charged. In other words, the ratio between the mean time available for charging and balancing at the EV fleet depot and the mean time required for charging and balancing creates the CDF, which is then factored into each dispatch planning run for a second day.

At step 308, a list 32 of routes for the second day is received. Along with the CDF and the charging requirements for each EV in the EV fleet this enables an expected state of charge of each EV to be determined at step 310. The routes to be allocated to EVs for the second day will depend on the expected state of charge of each EV, since one of the constraints in solving the objective of maximising the distance covered by the EV fleet as a whole requires the availability of the EV to be considered. This includes whether or not an EV is out of use due to service, maintenance or breakdown, for example. The routes are therefore allocated at step 312. Now, at step 314, it is confirmed that the at least one route allocated to each EV conforms to the overall balancing of the EV fleet. This is achieved if the at least one route allocated to an EV on the first day is different to the at least one route allocated to the EV on the second day. Finally, with the route allocation information and the CDF for each EV in the EV fleet, a dispatch schedule 33 for the second day is determined at step 316. This planning may be extended in the same manner as in Figure 2 over a number of successive days.

Although the CDF described above is designed such that each EV reaches 100% of its battery storage capacity when charged and balanced, it is not always possible to ensure that this happens due to operational effects. These may be limited by such factors as sequential charging for two EVs connected to a single charger, limitations on the speed of charging due to power grid issues and unexpected events in daily operation, such as detours or delays on routes or weather conditions requiring HVAC use. This may be taken into account by varying the CDF from a set factor for EVs that have not been sufficiently charged. This process is illustrated in Figure 4. Figure 4 is a flowchart illustrating a method of removing EVs that are not fully charged and balanced from the dispatch planning for use with embodiments of the present invention. The method 400 initially generates a charging schedule for the EVs in the EV fleet based on a dispatch schedule for the second day at step 402. This charging schedule is optimised at step 404 to maximise the number of EVs in the EV fleet that have fully charged and balanced battery storage. At step 406, any EVs that do not have fully charged and balanced battery storage, the CDF is incremented by an amount ΔCDF, and an updated charging schedule is determined for the second day. The steps of optimising and incrementing the value of the *CDF* by ΔCDF are repeated until either a pre-determined maximum number of iterations is reached or all EVs in the EV fleet have fully charged and balanced battery storage, whichever occurs first. Then, at step 408, EVs for which the battery storage is not fully charged and balanced are allocated to shorter routes. Finally, at step 410, any EVs for which the battery storage is not fully charged and balanced is removed from the dispatch planning. One option for these EVs is that once it has been removed from the dispatch planning it may manually dispatched, in other words, the EV fleet supervisor or owner takes a decision that the battery storage of the EV is sufficiently charged and balanced for it to be allocated certain routes. This EV can be reconsidered within the dispatch planning method at the end of the day on which it is manually dispatched, as the required data for dispatch planning for the next day is still available.

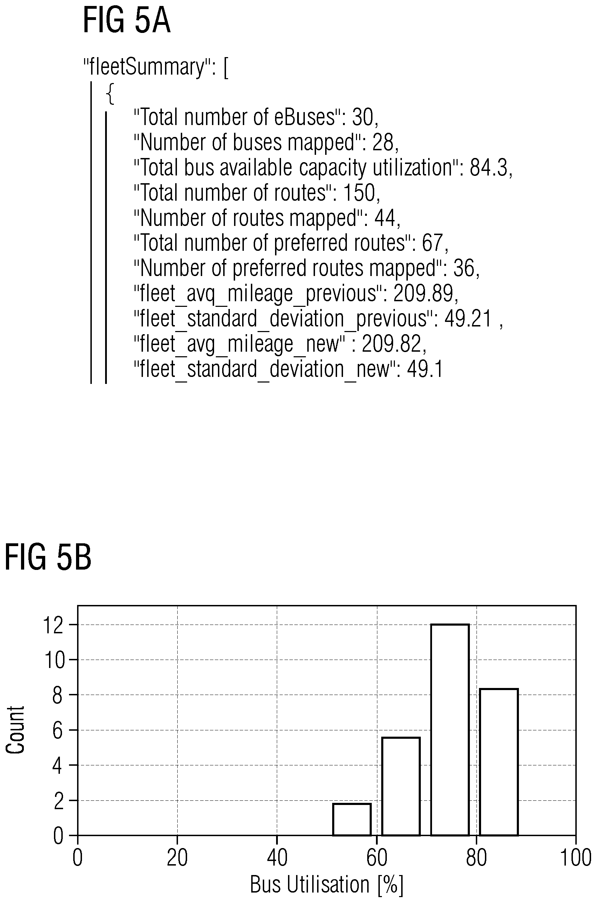

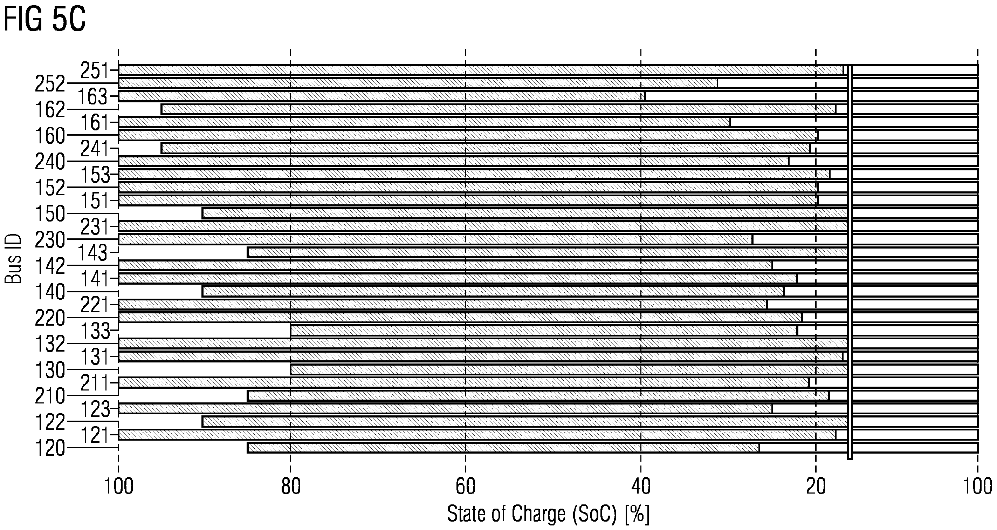

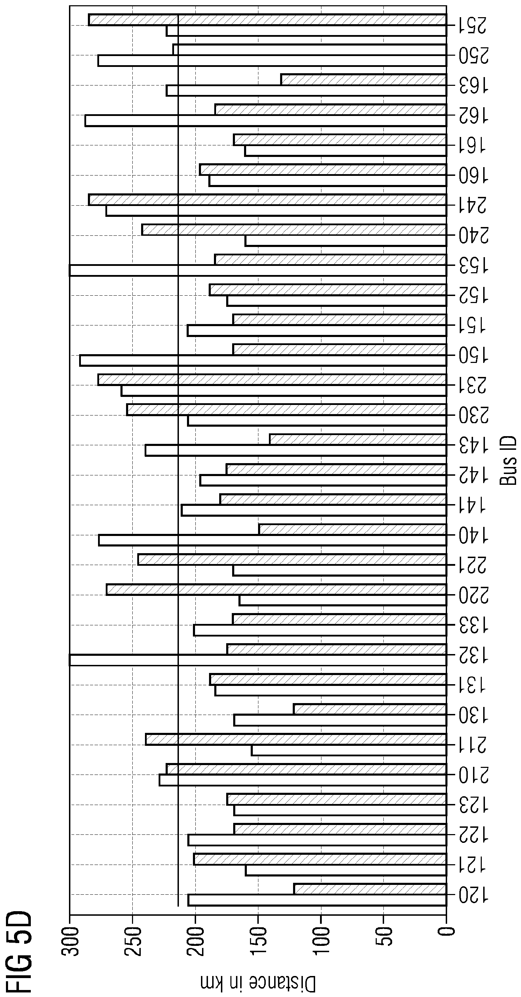

Testing was carried out in order to assess the efficacy of the embodiments of the invention described above. Initially, to determine the CDF, EV fleet data was analysed as described, and the value of the CDF set at 2. To avoid a large number of iterations and excessive time spent within the EV fleet depot charging, the value of ΔCDF was set at 0.5, and the maximum number of iterations for increasing the CDF was set at 3. Any more than three iterations (resulting in a CDF value of 5) was found to result in an EV remaining at the EV fleet depot for too much time to make route allocation, and therefore maximising the distance covered by the EV fleet as a whole, viable. An EV fleet comprising thirty buses of vehicle length types 2 and 3 (from Table 1 above) and having three different battery storage capacities ranging from 240kWh to 512kWhwas used to cover 150 individual routes. Figure 5 illustrates the results of the use of the methods in accordance with the second embodiment of the present invention. A fleet summary is shown in Figure 5a, indicating the total number of buses, the number of buses mapped to routes, the total bus availability and capacity utilisation (as a percentage), the total number of routes, the number of routes mapped to a bus, the number of preferred routes mapped to a bus, the average fleet mileage and standard deviation prior to the dispatch scheduling (in km), and the average fleet mileage and standard deviation after the dispatch scheduling (in km). Figure 5b is a chart showing the percentage bus utilisation along the x-axis and number of buses along the y-axis. Figure 5c is a chart illustrating the start, utilised and remaining state of charge of each of the thirty buses in the EV fleet, with the state of charge safety margin of 15% indicated by the solid vertical line. Utilised state of charge is illustrated as hatched area and remaining state of charge is illustrated as solid area. Figure 5d is a charge indicating previous average mileage (the left-hand bar per bus) and the distance assigned via route allocation (the right-hand bar per bus) each in km for all thirty buses in the EV fleet, with the previous and new EV fleet average mileages marked in solid horizontal lines. It can be seen that the method according to the second embodiment of the present invention provided a modal bus utilisation of 70%, and that only one bus was left with a state of charge lower than the safety margin (bus 150).

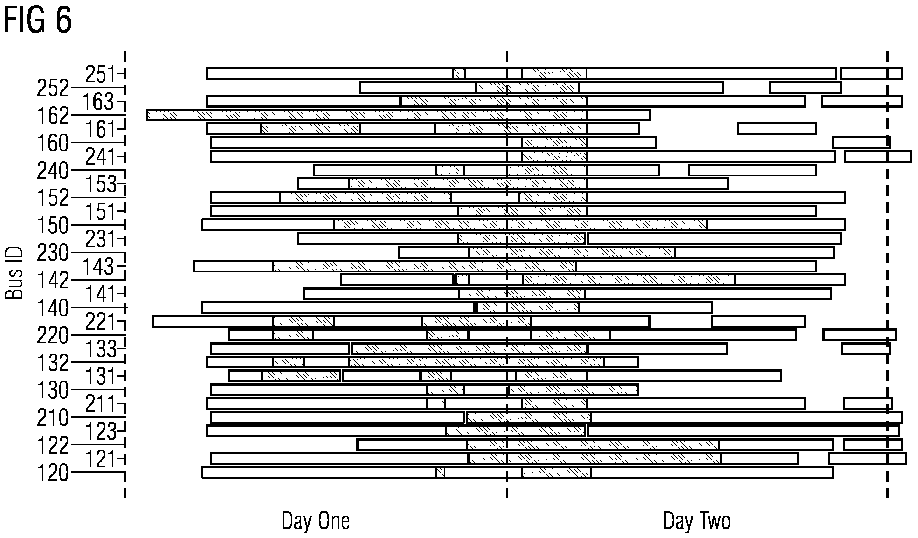

Figure 6 is a chart illustrating the bus-to-route mapping for the first second day dispatch planning for the EV fleet of Figure 5. For each bus, the solid line indicates when the bus is out on its allocated route, and the hatched line indicates when the bus has returned to the EV fleet depot for charging and balancing. The solid vertical line marks 12:00am on the second day. Gaps between solid lines on the second day also indicate when the bus may return to the EV fleet depot for charging and balancing. The route allocations per bus are shown in Table 5 below.

Table 5: Bus route allocations for Day 1 and Day 2 in accordance with a second embodiment of the present invention.

| Day 1 | |
|---|---|
| Bus ID | Route(s) |
| 251 | 64, 245 |
| 250 | 16 |
| 162 | 66, 19 |
| 161 | 66, 19 |
| 160 | 49 |
| 241 | 94 |
| 240 | 13, 243 |
| 153 | 9 |
| 152 | 91, 229 |
| 151 | 75 |
| 150 | 8 |
| 231 | 8 |
| 230 | 34 |
| 143 | 12 |
| 142 | 196, 247 |
| 141 | 167 |
| 140 | 11 |
| 221 | 7, 194 |
| 220 | 146, 169, 246 |
| 133 | 76 |
| 132 | 60, 168 |
| 131 | 142, 197, 225 |

(continued)

| Day 1 | |
|---|---|
| **Bus ID** | **Route(s)** |
| 130 | 47, 241 |
| 211 | 59, 222 |
| 210 | 69 |
| 123 | 53 |
| 122 | 200 |
| 121 | 26 |
| 120 | 20, 48 |
| **Day 2** | |
| **Bus ID** | **Route(s)** |
| 251 | 64, 245 |
| 250 | 2, 34 |
| 162 | 62, 19 |
| 161 | 66, 19 |
| 160 | 91, 225 |
| 241 | 86, 246 |
| 240 | 67, 13 |
| 153 | 57 |
| 152 | 26 |
| 151 | 75 |
| 150 | 193 |
| 231 | 69 |
| 230 | 8 |
| 143 | 20 |
| 142* | - |
| 141 | 53 |
| 140 | 5 |
| 221 | 7, 194 |
| 220 | 147, 22 |
| 133 | 76, 241 |
| 132 | 142 |
| 131 | 56 |
| 130* | - |
| 211 | 59, 243 |
| 210 | 92 |
| 123 | 49 |
| 122 | 196, 247 |
| 121 | 197, 229 |
| 120 | 98 |

Note: Buses marked * have no specific route allocated on Day 2 as the final route allocated on Day 1 is overnight.

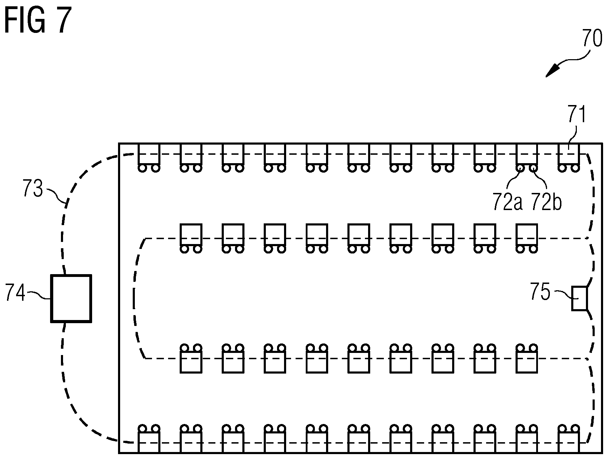

Figure 7 is a schematic representation of an electric vehicle (EV) fleet dispatch system employing methods in accordance with the embodiments of the present invention. The system 70 is illustrated housed within an EV fleet depot 71, which is provided with a plurality of EV chargers. Each EV charger is provided with two charging connectors 72a, 72b in this example. Within the EV fleet depot 71 a communication network 73 connects each EV charger to a server 74 hosting the computer-implemented method according to the embodiments of the present invention. This server 74 may be a physical server within the EV fleet depot building, a remote server or a cloud or other form of distributed computing server. Each of the EV chargers 71 and the server 74 are adapted to exchange data via the communications network 73. A user terminal 75 is also provided within the EV fleet depot, and adapted to be connected to the server 74 via the communications network.

The embodiments of the invention described above offer several advantages to an EV fleet owner, such as a bus, coach or truck company owner. The use of both EV fleet balancing and maximising the daily distance covered by the EV fleet as a whole ensures that the EV fleet owner runs the individual vehicles in an optimum manner. This reduces the overall turnover in EVs within an EV fleet, thereby reducing the need to dispose of the EV batteries and recycle or scrap the remaining EV components. This creates an EV fleet that is a more sustainable and environmentally beneficial option for an EV fleet owner, and, since the cost of replacing and scrapping such EVs is considerable, maximises the return on investment in individual EVs for an EV fleet owner. When fleet balancing is not used, the EVs are allocated routes based on their individual batter storage behaviour, thus prolonging individual EV battery storage lifetime. When EV fleet balancing is included, rather than increasing the mileage of an individual EV quickly by running the same longer route every day, the mileage increase is tempered by changes in route length, resulting in an EV being serviceable for a longer period of time. An increase in the lifetime of an EV therefore reduces the turnover in the EV fleet, and the inherent battery disposal and vehicle scrappage impact on the environment.

Other features of the embodiments of the present invention also act together with the two objectives for EV fleet management to create a sustainable EV fleet. For example, allocating a route to an EV based on its vehicle length type ensures that the most appropriate EV serves that particular route. For example, if a smaller EV serves a busy, urban route, it is often likely to be full to capacity, increasing the rate at which the battery storage is drained and reducing its overall range per individual charge. This is true of also considering the consumption factor per route since this represents the conditions the EV will be used under. For example, some routes may have a greater number of passengers, be prone to adverse weather, require greater HVAC use and so on. In addition, assigning multiple routes to a single EV to maximise the use of the available charge also results in the most appropriate use of the available range. By planning the dispatch of EVs in the fleet a day ahead (therefore including day two planning with day one planning) it is possible to provide each EV with sufficient time to charge and balance overnight in the EV fleet depot. Since routes are allocated on day two based on the arrival time and state of charge at the end of day one, EVs requiring a longer charging time can be allocated routes departing the EV fleet depot later in the day. This is enhanced by the inclusion of the CDF as a way to deal with EVs for which additional charging is required over and above the average for the EV fleet.

These and other embodiments of the present invention are intended to be limited only by the scope of the claims appended herewith.

**Claims**

1. A computer-implemented method of planning the dispatch of individual electric vehicles (EV) in an EV fleet from an EV fleet depot, comprising:

   receiving a list of routes for a first day, allocating, on a maximum daily distance covered by the EV fleet basis, at least one route to each EV in the fleet available for route allocation, and determining a dispatch schedule for the first day;
   based on the dispatch schedule for the first day, determining an arrival time at the EV fleet depot and a state of EV charge for each EV in the fleet when its last route of the first day is complete;
   assigning a charging duration factor (CDF) to each EV in the EV fleet based on a respective charging requirement of each EV and an available charging infrastructure of the EV fleet depot;
   receiving a list of routes for a second day;
   based on the charging duration factor (CDF) assigned to each EV and the charging requirements for each EV:

      determining an expected state of charge for the EV; and
      allocating at least one route to the EV for the second day on the basis of the

   expected state of charge; and
   based on the route allocation and the charging duration factor (CDF) of each EV in the EV fleet, determining a dispatch schedule for the second day.

2. A computer-implemented method as claimed in claim 1, wherein the allocating at least one route to the EV for the second day further comprises:
confirming that the at least one route allocated to the EV conforms to overall EV fleet balancing.

3. A computer-implemented method as claimed in claim 2, wherein the at least one route allocated to the EV for the second day conforms to overall EV fleet balancing if the at least one route is different to the at least one route allocated to the EV for the first day.

4. A computer-implemented method as claimed in any of claims 1,2 or 3, further comprising:

(i) based on the dispatch schedule for the second day, generating a charging schedule for the EVs in the EV fleet;
(ii) optimising the charging schedule to maximise the number of EVs in the EV fleet that have fully charged and balanced battery storage;
(iii) for any EVs for which the battery storage is not fully charged and balanced, incrementing the charging duration factor (i) by an amount $\Delta CDF$ and determining an updated charging schedule for the second day;
repeating steps (i) to (ii) until either a pre-determined maximum number of iterations is reached or all EVs in the EV fleet have fully charged and balanced battery storage, whichever occurs first;
allocating EVs for which the battery storage is not fully charged and balanced to shorter routes; and
removing any remaining EVs for which the battery storage is not fully charged and balanced from the dispatch planning.

5. A computer-implemented method as claimed in any preceding claim, wherein the allocating at least one route to each EV in the fleet available for route allocation comprises implementing a mixed-integer linear programming (MILP) model.

6. A computer-implemented method as claimed in claim 5, wherein the implementing a mixed integer linear programming (MILP) model comprises:

defining the route allocation as an objective problem of maximising the distance covered by the EV fleet; and solving the objective problem within the constraints of :

a) allocating each route to a maximum of one EV;
b) allocating multiple routes to an EV depending upon the battery storage capacity of the EV;
c) allocating a route to an EV based upon an EV type classification requirement of the route;
d) allocating a route to an EV based upon its availability.

7. A computer-implemented method as claimed in claim 6, further comprising defining the route allocation as an objective problem of balancing the EV fleet.

8. A computer-implemented method as claimed in any preceding claim, further comprising repeating the steps to determine the dispatch schedule for the second day to determine the dispatch schedule for successive days.

9. An electric vehicle (EV) fleet dispatch system, comprising:

a plurality of EV chargers;
a communications network; and
a server hosting a computer-implemented scheduling method for scheduling EV charging in the depot as claimed in any of claims 1 to 8,
wherein the plurality of EV chargers and the server are connected in a network by, and adapted to exchange data via, the communications network.

10. An electric vehicle (EV) fleet dispatch system as claimed in claim 9, further comprising a user terminal adapted to be connected to the server via the communications network.

11. A computer-implemented method as claimed in any of claims 1 to 8, or an electric vehicle (EV) fleet dispatch system as claimed in claims 9 or 10, wherein the electric vehicles are buses.

FIG 1

FIG 2

# FIG 3

300

30 → 302 → 31

31 → 304

306

32 → 308

310

312

314

316 → 33

# FIG 4

400

402

404

406

408

410

EP 4 787 254 A1

# FIG 5A

"fleetSummary": [
{
"Total number of eBuses": 30,
"Number of buses mapped": 28,
"Total bus available capacity utilization": 84.3,
"Total number of routes": 150,
"Number of routes mapped": 44,
"Total number of preferred routes": 67,
"Number of preferred routes mapped": 36,
"fleet_avq_mileage_previous": 209.89,
"fleet_standard_deviation_previous": 49.21 ,
"fleet_avg_mileage_new" : 209.82,
"fleet_standard_deviation_new": 49.1

# FIG 5B

FIG 5C

Bus ID

State of Charge (SoC) [%]

100    80    60    40    20    100

251
252
163
162
161
160
241
240
153
152
151
150
231
230
143
142
141
140
221
220
133
132
131
130
211
210
123
122
121
120

EP 4 787 254 A1

FIG 5D

Distance in km / Bus ID

# FIG 6

Bus ID

Day One          Day Two

EP 4 787 254 A1

FIG 7

Europäisches
Patentamt

European
Patent Office

Office européen
des brevets

# EUROPEAN SEARCH REPORT

**Application Number**

EP 25 15 4947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/346422 A1 (WOOTTON BRUCE [US] ET AL) 17 October 2024 (2024-10-17) <br> * abstract * <br> * paragraphs [0007], [0010], [0013], [0016], [0024], [0040] - [0049], [0057], [0058], [0062] - [0064], [0068] * <br> * paragraphs [0073], [0074], [0080] - [0082], [0096], [0109], [0112], [0125], [0126] * <br> ----- | 1-11 | INV. <br> G06Q10/047 <br> G06Q10/0631 <br> G06Q50/40 |
| A | ZHOU YU ET AL: "Charging facility planning and scheduling problems for battery electric bus systems: A comprehensive review", TRANSPORTATION RESEARCH PART E: LOGISTICS AND TRANSPORTATION REVIEW, PERGAMON, AMSTERDAM, NL, vol. 183, 19 February 2024 (2024-02-19), XP087475126, ISSN: 1366-5545, DOI: 10.1016/J.TRE.2024.103463 [retrieved on 2024-02-19] <br> * abstract * <br> * sections 3 to 5 * <br> ----- | 1-11 | |
| A | YAN YIMO ET AL: "A mixed-integer programming-based Q-learning approach for electric bus scheduling with multiple termini and service routes", TRANSPORTATION RESEARCH PART C:EMERGING TECHNOLOGIES, PERGAMON, NEW YORK, NY, GB, vol. 162, 4 April 2024 (2024-04-04), XP087516874, ISSN: 0968-090X, DOI: 10.1016/J.TRC.2024.104570 [retrieved on 2024-04-04] <br> * abstract * <br> * sections 2 to 3 * <br> ----- | 1-11 | |

**TECHNICAL FIELDS SEARCHED (IPC)**

G06Q

The present search report has been drawn up for all claims

| Place of search | Date of completion of the search | Examiner |
|---|---|---|
| Munich | 8 July 2025 | Moltenbrey, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ................................................................

& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 15 4947

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | Publication date | Patent family member(s) | Publication date |
|---|---|---|---|
| US 2024346422 A1 | 17-10-2024 | US 2024346422 A1<br>WO 2024216240 A2 | 17-10-2024<br>17-10-2024 |

EPO FORM P0459

For more details about this annex : see Official Journal of the European Patent Office, No. 12/82